# EUROPÄISCHE PATENTANMELDUNG

(11) **EP 2 163 448 A1**
(43) Veröffentlichungstag der Anmeldung: **17.03.2010**
(21) Anmeldenummer: 09011323.4
(22) Anmeldetag: 03.09.2009
(51) Int. Cl.: B60W 30/06

(54) **Fahrassistenzvorrichtung zur Unterstützung eines Fahrers eines Fahrzeugs beim Ausparken aus einer Parklücke**

(30) Priorität: 16.09.2008 DE 102008047284
(71) Anmelder: Valeo Schalter und Sensoren GmbH, 74321 Bietigheim-Bissingen (DE)
(72) Erfinder: Haberland, Udo, 71088 Holzgerlingen (DE)

(57) **Zusammenfassung**

Es wird eine Fahrassistenzvorrichtung zur Unterstützung eines Fahrers eines Fahrzeugs (01, 31, 41) beim Ausparken aus einer Parklücke (02, 32, 42) beschrieben, welche ein radargestütztes Meßsystem umfasst, welches während eines Ausparkvorgangs aus einer seitlich parallel einer Fahrbahn (03) liegenden Parklücke (02, 32, 42) den rückwärtigen Verkehr (04, 34, 44) und/oder Gegenverkehr (05, 35, 45) beobachtet und den Fahrer bei sich wenigstens in einer Fahrspur, in die das ausparkende Fahrzeug (01, 31, 41) ausparkt während des Ausparkvorgangs rückwärtig annähernden Fahrzeugen (04, 34, 44), und/oder bei sich während des Ausparkvorgangs in einer Gegenspur annähernden Fahrzeugen (05, 35, 45) zumindest warnt.

## Beschreibung

### Stand der Technik

Die Erfindung ist im Bereich der Umfelderfassung von Fahrzeugen angesiedelt. Insbesondere betrifft die Erfindung eine Fahrassistenzvorrichtung zur Unterstützung eines Fahrers eines Fahrzeugs beim Ausparken aus einer Parklücke gemäß dem Oberbegriff des Anspruchs 1.

Bekannte Fahrassistenzvorrichtungen zur Unterstützung eines Fahrers eines Fahrzeugs beim Ein- und/oder Ausparken, im Folgenden kurz als Parkassistenzsysteme bezeichnet, helfen dem Fahrer, wenn es sich um ein Einparksystem handelt, aktiv in eine seitlich parallel oder quer zu einer Fahrbahn liegende Parklücke einzuparken, und wenn es sich um ein Ausparksystem handelt, aus einer solchen Parklücke wieder auszuparken. Beispielsweise bei einem Einparksystem vermißt das Einparksystem mit beispielsweise seitlich am Fahrzeug angebrachten Sensoren, beispielsweise Ultraschallsensoren (Ultrasonic Park Assist Sensoren; UPA-Sensoren), eine mögliche Parklücke, berechnet aus den Lückendaten eine Einparktrajektorie und steuert das Fahrzeug beispielsweise durch aktiven Lenkeingriff oder durch Fahranweisungen an den Fahrer in die Parklücke. Während des Einparkvorgangs bzw. beim Einparken wird die Distanz zu die Parklücke begrenzenden Objekten durch UPA-Sensoren überwacht. Ähnlich verhält es sich bei einem Ausparksystem. Auch dort wird eine Ausparktrajektorie berechnet und das Fahrzeug beispielsweise durch Fahranweisungen an den Fahrer entlang der Ausparktrajektorie aus der Parklücke gesteuert.

Einparkvorgänge können jedoch halb- oder vollautomatisch unter Verwendung von Ultraschallsensoren umfassenden Einparksystemen durchgeführt werden.

Zur Verwirklichung eines halb- oder vollautomatischen Ausparksystems bzw. einer halb- oder vollautomatischen Ausparkhilfe muss jedoch zusätzlich sichergestellt werden, dass keine Kollision mit anderen, sich beispielsweise rückwärtig annähernden Fahrzeugen in einer Fahrspur, in die das ausparkende Fahrzeug ausparkt, oder mit Fahrzeugen in der Gegenspur während des Ausparkvorgangs auftreten kann.

Als eine Aufgabe der Erfindung kann es deshalb angesehen werden, ein Ausparksystem zu entwickeln, mit dem ein sicheres halb- oder vollautomatisches Ausparken möglich ist.

### Offenbarung der Erfindung

Die Aufgabe wird erfindungsgemäß gelöst durch eine Fahrassistenzvorrichtung mit den Merkmalen des Anspruchs 1.

Erfindungsgemäß ist demnach eine Fahrassistenzvorrichtung zur Unterstützung eines Fahrers eines Fahrzeugs beim Ausparken aus einer Parklücke vorgesehen, welche ein radargestütztes Meßsystem umfasst, welches während eines Ausparkvorgangs aus einer auch als parallele Parktasche bezeichneten seitlich parallel einer Fahrbahn liegenden Parklücke den rückwärtigen Verkehr und/oder Gegenverkehr beobachtet, und den Fahrer bei sich wenigstens in einer Fahrspur, in die das ausparkende Fahrzeug ausparkt, während des Ausparkvorgangs rückwärtig annähernden Fahrzeugen und/oder bei sich während des Ausparkvorgangs in einer Gegenspur annähernden Fahrzeugen zumindest warnt.

Wegen der hohen Relativgeschwindigkeit von sich in Fahrt befindenden Fahrzeugen und einem ausparkenden Fahrzeug genügt die nur wenige Meter umfassende Reichweite von in beispielsweise Ein- oder Ausparksystemen nach dem Stand der Technik verbauten Ultraschallsensoren nicht aus. Erfindungsgemäß ist daher ein radargestütztes Meßsystem mit einer Reichweite von je nach Umgebungssituation und Auslegung bis zu mehreren hundert Metern vorgesehen, um sich dem ausparkenden Fahrzeug mit hoher Relativgeschwindigkeit nähernde Fahrzeuge zu erfassen und gegebenenfalls den Fahrer des ausparkenden Fahrzeugs zumindest zu warnen.

Vorteile der Erfindung gegenüber dem Stand der Technik ergeben sich insbesondere durch ein dank der zuverlässigen Überwachung von sich dem ausparkenden Fahrzeug annähernden Fahrzeugen durch das radargestützte Meßsystem ergebendes sichereres Ausparken aus einer insbesondere parallel längs zu einer Fahrbahn orientierten Parklücke.

Eine vorteilhafte Ausgestaltung der Erfindung sieht vor, dass die Fahrassistenzvorrichtung zur Umfelderfassung im Nahbereich zusätzlich Ultraschallsensoren aufweist. Ist das Fahrzeug bzw. die Fahrassistenzvorrichtung zusätzlich mit Ultraschallsensoren ausgestattet, ergibt sich durch die Verwendung bzw. Fusion von Ultraschall und Mittel- und/oder Fernbereichsradarsensoren bei der Umfelderfassung eines Fahrzeugs eine nahtlose Erschließung des Nahbereichs von wenigen Zentimetern bis in den Fernbereich von mehreren hundert Metern. Ein Ausparksystem zum sicheren halb- oder vollautomatischen Ausparken besteht somit in einer z.B. auf Ultraschall-Technologie basierenden Nahbereichsensorik für den Ausparkvorgang in Kombination mit einer Radarsensorik, vorzugsweise einer Mehrkeulen-Radarsensorik, für die Überwachung der Fahrbahn, in die eingefahren werden soll. Der Warnbereich der Radarsensorik wird dabei durch die Odometrie bzw. Ausparktrajektorie des ausparkenden Fahrzeugs gesteuert.

Eine andere vorteilhafte Ausgestaltung der Erfindung sieht vor, dass das Meßsystem bei sich während des Ausparkvorgangs wenigstens in einer Fahrspur, in die das ausparkende Fahrzeug ausparkt, rückwärtig annähernden Fahrzeugen, und/oder bei sich während des Ausparkvorgangs in einer Gegenspur annähernden Fahrzeugen den Ausparkvorgang verhindert oder abbricht oder beschleunigt. Das Verhindern kann beispielsweise durch einen Bremseingriff vollautomatisch erfolgen. Das Abbrechen kann beispielsweise durch Ausgabe einer Warnung an den Fahrer des ausparkenden Fahrzeugs erfolgen. Grundsätzlich ist denkbar, statt einer Warnung bzw. einem Abbruch des Ausparkvorgangs den Ausparkvorgang zu beschleunigen, um sich annähernde Fahrzeuge nicht zu behindern.

Eine zusätzliche vorteilhafte Ausgestaltung der Erfindung sieht vor, dass das radargestützte Meßsystem mindestens einen Radarsensor pro Fahrzeugseite umfasst.

Dabei ist denkbar, dass der mindestens eine Radarsensor pro Fahrzeugseite in Fahrtrichtung des Fahrzeugs gesehen mindestens eine Strahlkeule nach hinten und eine Strahlkeule nach vorne aussendet.

Ebenfalls ist denkbar, dass eine seitwärts gerichtete Strahlkeule des mindestens einen Radarsensors pro Fahrzeugseite dazu verwendet wird, um die Straßenbreite beispielsweise anhand einer Randbebauung für den Ausparkvorgang abzuschätzen.

Vorzugsweise wird einer sich während des Ausparkvorgangs verändernden relativen Lage des ausparkenden Fahrzeugs zur Fahrbahn durch die Odometrie bzw. Ausparktrajektorie des Ausparkvorgangs Rechnung getragen, indem je nach Orientierung des ausparkenden Fahrzeugs zur Fahrbahn während des Ausparkvorgangs unterschiedliche, von dem mindestens einen Radarsensor ausgesendete Strahlkeulen zur Überwachung von sich annähernden Fahrzeugen verwendet werden, und/oder um den Abstand zur Randbebauung zu kontrollieren.

Eine vorteilhafte Ausgestaltung der Erfindung sieht vor, dass die Fahrassistenzvorrichtung bzw. das Meßsystem Position und Geschwindigkeit eines sich annähernden Fahrzeugs ermittelt, um daraus ein Gefährdungsmaß für den Ausparkvorgang zu berechnen.

Vorzugsweise wird der Ausparkvorgang nur dann gestartet oder fortgeführt, wenn anhand des Gefährdungsmaßes feststeht, dass keine Kollision mit den sich annähernden Fahrzeugen zu erwarten ist.

Eine besonders vorteilhafte Ausgestaltung der Erfindung sieht vor, dass eine Aktivierung des Messsystems zur Überwachung des Verkehrs während des Ausparkvorganges unterbleibt, solange das ausparkende Fahrzeug nicht ausparken möchte und eine Warnung vor sich annähernden Fahrzeugen überflüssig ist.

Vorzugsweise wird dabei eine Warnung von sich annähernden Fahrzeugen erst dann gegeben, wenn das ausparkende Fahrzeug sich in seiner Parklücke bewegt. Dieses kann vorzugsweise durch die Raddrehzahlen und/oder Gangwahl und/oder Informationen der beispielsweise Ultraschall-Nahbereichsensorik erkannt werden. Die Verwendung der Radartechnologie ermöglicht darüber hinaus aufgrund einer Wellenlänge von typischerweise 12.5mm (24 GHz) bereits eine frühzeitige Erkennung einer Bewegung des ausparkenden Fahrzeugs bei Ortsveränderungen im Wellenlängenbereich. Somit kann durch die Beobachtung der ortfesten Ziele mit dem Radarsensor eine Bewegung des ausparkenden Fahrzeugs zusätzlich erkannt werden und damit die Radarüberwachung für den Ausparkvorgang aktiviert werden.

### Kurze Beschreibung der Zeichnung

Ausführungsbeispiele der Erfindung sind in den Figuren der Zeichnung dargestellt und nachfolgend näher erläutert. Es zeigen:
- Fig. 1: Eine schematische Darstellung einer ersten Situation während eines Ausparkvorgangs eines mit einer erfindungsgemäßen Fahrassistenzvorrichtung gemäß einem ersten Ausführungsbeispiel ausgestatteten Fahrzeugs.
- Fig. 2: Eine schematische Darstellung einer zweiten Situation während des Ausparkvorgangs des Fahrzeugs aus Fig. 1.
- Fig. 3: Eine schematische Darstellung einer Situation während eines Ausparkvorgangs eines mit einer erfindungsgemäßen Fahrassistenzvorrichtung gemäß einem zweiten Ausführungsbeispiel ausgestatteten Fahrzeugs.
- Fig. 4: Eine schematische Darstellung einer Situation während eines Ausparkvorgangs eines mit einer erfindungsgemäßen Fahrassistenzvorrichtung gemäß einem dritten Ausführungsbeispiel ausgestatteten Fahrzeugs.

### Wege zur Ausführung der Erfindung

Zur Verwirklichung einer zuverlässig und sicher funktionierenden, halb- oder vollautomatischen, auch als Ausparksystem bzw. als Ausparkhilfe bezeichneten Fahrassistenzvorrichtung zur Unterstützung eines Fahrers eines Fahrzeuges beim Ausparken aus einer seitlichen Parklücke längs zu einer Fahrbahn muss sichergestellt werden, dass keine Kollision mit anderen, sich beispielsweise rückwärtig annähernden Fahrzeugen in einer Fahrspur, in die das ausparkende Fahrzeug ausparkt, oder mit Fahrzeugen in der Gegenspur während des Ausparkvorgangs auftreten kann. Wegen der hohen Relativgeschwindigkeit von sich in Fahrt befindenden Fahrzeugen und einem ausparkenden Fahrzeug genügt hierzu die nur wenige Meter reichende Reichweite von Ultraschallsensoren nicht aus.

Erfindungsgemäß ist deshalb eine Fahrassistenzvorrichtung zur Unterstützung eines Fahrers eines Fahrzeuges beim Ausparken aus einer seitlichen Parklücke längs zu einer Fahrbahn in Form eines Auspark- bzw. Parkassistenzsystems mit einem radargestützten Meßsystem vorgesehen, welches Meßsystem den rückwärtigen Verkehr und/oder Gegenverkehr während des Ausparkvorgangs aus einer auch als parallele Parktasche bezeichneten seitlich parallel der Fahrbahn liegende Parklücke beobachtet und den Fahrer zumindest warnt.

Radarsensorik wird in Fahrzeugen für Fahrassistenzsysteme wie beispielsweise einem als Active bzw. Adaptive Cruise Control (ACC) bekannten Abstandsregeltempomat, zur Totwinkelüberwachung, zur Crash-Früherkennung, insbesondere zur Seitencrash-Früherkennung, zur Stop-and-Go Assistenz, zur Unterstützung bei einem Spurwechsel in Form eines sogenannten Lane-Change Assistenzsystems sowie bei Türöffnungsassistenten eingesetzt, um nur einige zu nennen. Ist das Fahrzeug zusätzlich mit Ultraschallsensoren ausgestattet ergibt sich durch die Verwendung bzw. Fusion von Ultraschall und Mittel- und/oder Fernbereichsradarsensoren bei der Umfelderfassung eines Fahrzeugs eine nahtlose Erschließung des Nahbereichs von wenigen Zentimetern bis in den Fernbereich von mehreren hundert Metern.

Das in ein Ausparksystem integrierte bzw. integrierbare Meßsystem, welches während eines Ausparkvorgangs zumindest die rückwärtige Fahrspur auf annähernde Fahrzeuge überwacht, umfasst vorzugsweise einen oder mehrere Radarsensoren pro Fahrzeugseite. Weiterhin ist vorzugsweise eine Überwachung des Gegenverkehrs mit dem mindestens einen Radarsensor möglich. Dieses Meßsystem wird erfindungsgemäß in Verbindung mit einem vorzugsweise halb-oder vollautomatischen Ausparksystem z.B. auf Basis von Ultraschallsensoren verwendet, um im Falle einer möglichen Kollision mit einem sich in Fahrt befindlichen Fahrzeug den Ausparkvorgang zu verhindern oder abzubrechen. Das Verhindern kann beispielsweise durch einen Bremseingriff vollautomatisch erfolgen. Das Abbrechen kann beispielsweise durch Ausgabe einer Warnung an den Fahrer des ausparkenden Fahrzeugs erfolgen.

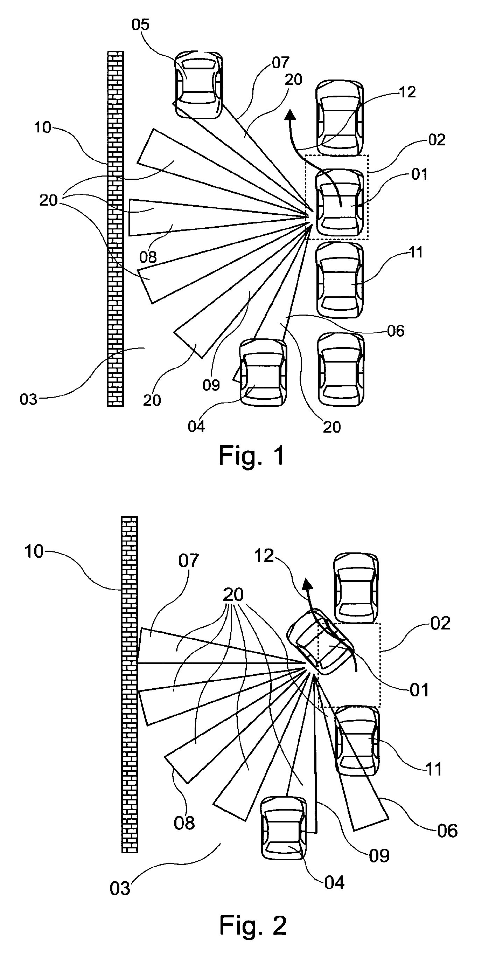

Bei einem in den Figuren 1 und 2 dargestellten Ausparkvorgang eines mit einer erfindungsgemäßen Ausparksystem mit radargestütztem Messsystem ausgestatteten Fahrzeugs 01 möchte das Fahrzeug 01 aus einer Parklücke 02 parallel längs zu einer Fahrbahn 03 ausparken. Auf der Fahrbahn 03 gibt es rückwärtigen Verkehr 04 und Gegenverkehr 05. Der rückwärtige Verkehr 04 ist durch ein Fahrzeug 04 dargestellt, welches sich in einer Fahrspur, in die das ausparkende Fahrzeug 01 ausparkt rückwärtig annähert. Der Gegenverkehr 05 ist durch ein Fahrzeug 05 dargestellt, welches dem ausparkenden Fahrzeug 01 während des Ausparkvorgangs auf der Gegenspur entgegenkommt.

Im seitlichen Bereich des Fahrzeugs 01 befindet sich ein mehrere Strahlkeulen 20 aussendender Radarsensor, der, in Fahrtrichtung des Fahrzeugs 01 gesehen, mindestens eine Strahlkeule 06 nach hinten und eine Strahlkeule 07 nach vorne aussendet. Das Fahrzeug 04, das sich dem ausparkenden Fahrzeug 01 aus dem rückwärtigen Bereich nähert, wird von der Strahlkeule 06 erfasst. Für das Fahrzeug 04 werden Position und Geschwindigkeit ermittelt, um daraus ein Gefährdungsmaß für den Ausparkvorgang zu berechnen. Der Radarsensor ist Bestandteil des Ausparksystems, kann aber auch Daten für andere Fahrassistenzsysteme liefern.

Das Fahrzeug 05 wird von der Strahlkeule 07 erfasst und das Ausparksystem bzw. das Meßsystem berechnet aus der Position und Geschwindigkeit des Fahrzeugs 05 ein Gefährdungsmaß für den Ausparkvorgang. Der Ausparkvorgang wird nur dann gestartet oder fortgeführt, wenn keine Kollision mit den Fahrzeugen 04 und 05 zu erwarten ist.

Vorteilhaft ist es ferner, eine seitwärts gerichtete Strahlkeule 20, beispielsweise die Strahlkeule 08, zu verwenden, um die Straßenbreite beispielsweise anhand einer Randbebauung 10 für den Ausparkvorgang abschätzen zu können.

Während des Ausparkvorgangs verändert sich die relative Lage des ausparkenden Fahrzeugs 01 zur Fahrbahn 03 bzw. Fahrspur. Dies kann durch die Odometrie bzw. Ausparktrajektorie 12 des Ausparkvorgangs erkannt werden. Je nach Orientierung des ausparkenden Fahrzeugs 01 zur Fahrbahn 03 bzw. zur Fahrspur muß der Warnbereich der Radarsensorik korrigiert werden.

Dies kann bevorzugt wie in Fig. 2 dargestellt durch Verwendung weiterer Strahlkeulen 20 geschehen. So wird in Fig. 2 beispielsweise die Strahlkeule 09 verwendet, um den rückwärtigen Bereich zu beobachten, und die Strahlkeule 07 wird verwendet, um den Abstand zur Randbebauung 10 zu kontrollieren.

Ein weiterer Vorteil einer solchen, auch als Mehrkeulen-Radarsensorik bezeichenbaren Radarsensorik ergibt sich durch eine höhere Störfestigkeit. Ein die Parklücke 02 hinter dem ausparkenden Fahrzeug 01 begrenzendes Objekt 11, beispielsweise ein parkendes Fahrzeug 11, wird beim Ausparken im Wesentlichen durch die Strahlkeule 06 erkannt und beeinflusst somit die Empfindlichkeit der Strahlkeule 09 nicht. Bei Verwendung nur einer Strahlkeule 20 im rückwärtigen Bereich würde das hinter dem ausparkenden Fahrzeug 01 stehende Objekt 11 eventuell das sich annähernde Fahrzeug 04 maskieren.

Ein erfindungsgemäßes Ausparksystem zum sicheren halb- oder vollautomatischen Ausparken umfasst vorzugsweise eine z.B. auf Ultraschall-Technologie basierende Nahbereichsensorik für den Ausparkvorgang in Kombination mit einer Mehrkeulen-Radarsensorik für die Überwachung der Fahrbahn 03 in die eingefahren werden soll. Der Warnbereich der Radarsensorik wird dabei durch die Odometrie bzw. Ausparktrajektorie 12 des ausparkenden Fahrzeugs 01 gesteuert.

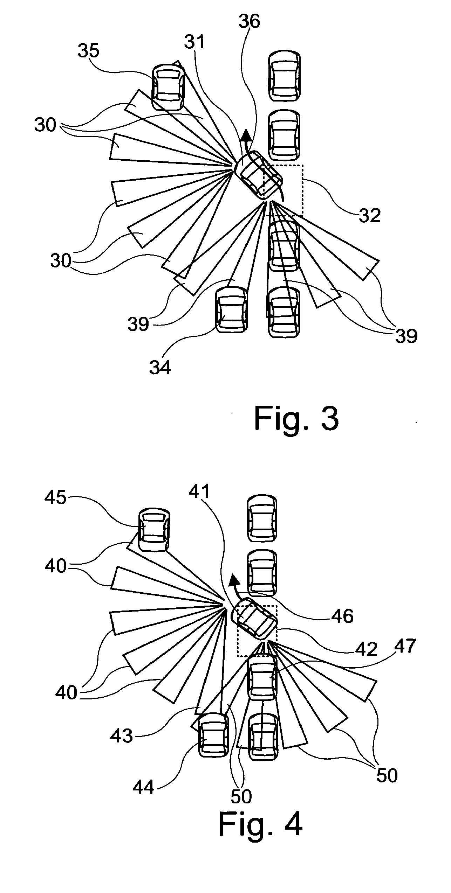

Alternativ können wie in Fig. 3 dargestellt zwei Radarsensoren pro Seite verwendet werden, die dann gegebenenfalls jeweils weniger Keulen 30, 39 haben oder eine bessere Abdeckung des vorderen Bereichs des entlang der Ausparktrajektorie 36 ausparkenden Fahrzeuges 31 ermöglichen.

Je nach Ausparksituation kann auch ein hinten am ausparkenden Fahrzeug 41 angeordneter Radarsensor bzw. dessen Sensorkeulen 50 durch nachstehende Fahrzeuge 47 blockiert werden. In diesem Fall kann vorgesehen sein, den rückwärtigen Verkehr 44, dargestellt durch das Fahrzeug 44 in Fig. 4, während des Ausparkvorgangs entlang der Ausparktrajektorie 46 auch durch eine Strahlkeule 40 des vorderen Radarsensors zu erkennen, beispielsweise durch die Strahlkeule 43.

Eine Aktivierung des Meßsystems zur Überwachung des Verkehrs während eines Ausparkvorganges durch die Radarsensorik bzw. der Umfelderfassung kann derart durchgeführt werden, dass solange ein ausparkendes Fahrzeug 01, 31, 41 nicht ausparken möchte, eine Warnung vor sich annähernden Fahrzeugen 04, 05, 34, 35, 44, 45 unterbleibt, da sie überflüssig ist. Insbesondere braucht eine Warnung von sich annähernden Fahrzeugen 04, 05, 34, 35, 44, 45 erst dann gegeben zu werden, wenn das ausparkende Fahrzeug 01, 31, 41 sich in seiner Parklücke 02, 32, 42 bzw. Parkbucht 02, 32, 42 bewegt.

Dieses kann vorzugsweise durch die Raddrehzahlen und/oder Gangwahl und/oder Informationen der beispielsweise Ultraschall-Nahbereichsensorik erkannt werden.

Die Verwendung der Radartechnologie ermöglicht darüber hinaus aufgrund einer Wellenlänge von typischerweise 12.5mm (24 GHz) bereits eine frühzeitige Erkennung einer Bewegung des ausparkenden Fahrzeugs 01, 31, 41 bei Ortsveränderungen im Wellenlängenbereich. Somit kann durch die Beobachtung der ortfesten Ziele mit dem Radarsensor eine Bewegung des ausparkenden Fahrzeugs 01, 31, 41 zusätzlich erkannt werden und damit die Radarüberwachung für den Ausparkvorgang aktiviert werden.

Wichtig ist hervorzuheben, dass zur Umfeldüberwachung während eines Ausparkvorgangs auch nur ein einzelner Radarsensor im vorderen seitlichen Bereich des ausparkenden Fahrzeugs 01, 31, 41 verwendet werden kann. Anstelle der Ultraschallsensorik kann für die Nahbereichserkennung auch eine Kamera oder eine Infrarotlösung verwendet werden. Es kann auch nur ein einzelner Radarsensor in der Mitte der Seite des ausparkenden Fahrzeugs 01, 31, 41 verwendet werden. Es ist vorteilhaft den gleichen Radarsensor, der gegebenenfalls bereits zur Totwinkelüberwachung oder zur Unterstützung bei einem Spurwechsel im ausparkenden Fahrzeug 01, 31, 41 verbaut ist, für die Ausparkunterstützung zu verwenden. Das Radarsystem kann darüber hinaus auch zur Unterstützung eines Einparkvorgangs verwendet werden, um gegebenenfalls eine Kollisionswarnung währen des Einparkvorgangs mitzuteilen.

Grundsätzlich ist denkbar, statt einer Warnung bzw. einem Abbruch des Ausparkvorgangs den Ausparkvorgang zu beschleunigen.

Wichtig ist außerdem zu erwähnen, dass anstelle eines Radarsensors mit mehreren Strahlkeulen auch mehrere Radarsensoren mit jeweils einer oder zwei Strahlkeulen verwendet werden können.

## Patentansprüche

1. Fahrassistenzvorrichtung zur Unterstützung eines Fahrers eines Fahrzeugs (01, 31, 41) beim Ausparken aus einer Parklücke (02, 32, 42), **gekennzeichnet durch** ein radargestütztes Meßsystem, welches während eines Ausparkvorgangs aus einer seitlich parallel einer Fahrbahn (03) liegenden Parklücke (02, 32, 42) den rückwärtigen Verkehr (04, 34, 44) und/oder Gegenverkehr (05, 35, 45) beobachtet und den Fahrer bei sich wenigstens in einer Fahrspur, in die das ausparkende Fahrzeug (01, 31, 41) ausparkt während des Ausparkvorgangs rückwärtig annähernden Fahrzeugen (04, 34, 44), und/oder bei sich während des Ausparkvorgangs in einer Gegenspur annähernden Fahrzeugen (05, 35, 45) zumindest warnt.

2. Fahrassistenzvorrichtung nach Anspruch 1, **dadurch gekennzeichnet, dass** die Fahrassistenzvorrichtung zur Umfelderfassung im Nahbereich zusätzlich Ultraschallsensoren aufweist.

3. Fahrassistenzvorrichtung nach Anspruch 1 oder 2, **dadurch gekennzeichnet, dass** das Meßsystem bei sich während des Ausparkvorgangs wenigstens in einer Fahrspur, in die das ausparkende Fahrzeug (01, 31, 41) ausparkt, rückwärtig annähernden Fahrzeugen (04, 34, 44), und/oder bei sich während des Ausparkvorgangs in einer Gegenspur annähernden Fahrzeugen (05, 35, 45) den Ausparkvorgang verhindert oder abbricht oder beschleunigt.

4. Fahrassistenzvorrichtung nach Anspruch 1, 2 oder 3, **dadurch gekennzeichnet, dass** das radargestützte Meßsystem mindestens einen Radarsensor pro Fahrzeugseite umfasst.

5. Fahrassistenzvorrichtung nach Anspruch 4, **dadurch gekennzeichnet, dass** der mindestens eine Radarsensor pro Fahrzeugseite in Fahrtrichtung des Fahrzeugs (01, 31, 41) gesehen mindestens eine Strahlkeule (06) nach hinten und eine Strahlkeule (07) nach vorne aussendet.

6. Fahrassistenzvorrichtung nach Anspruch 4 oder 5, **dadurch gekennzeichnet, dass** eine seitwärts gerichtete Strahlkeule (07, 08) des mindestens einen Radarsensors pro Fahrzeugseite dazu verwendet wird, um die Straßenbreite für den Ausparkvorgang abzuschätzen.

7. Fahrassistenzvorrichtung nach Anspruch 4 oder 5, **dadurch gekennzeichnet, dass** je nach Orientierung des ausparkenden Fahrzeugs (01, 31, 41) zur Fahrbahn (03) während des Ausparkvorgangs unterschiedliche, von dem mindestens einen Radarsensor ausgesendete Strahlkeulen (06, 07, 09) zur Überwachung von sich annähernden Fahrzeugen (04, 05, 34, 35, 44, 45) verwendet werden.

8. Fahrassistenzvorrichtung nach einem der vorhergehenden Ansprüche, **dadurch gekennzeichnet, dass** die Fahrassistenzvorrichtung Position und Geschwindigkeit eines sich annähernden Fahrzeugs (04, 05, 34, 35, 44, 45) ermittelt, um daraus ein Gefährdungsmaß für den Ausparkvorgang zu berechnen.

9. Fahrassistenzvorrichtung nach Anspruch 8, **dadurch gekennzeichnet, dass** die Fahrassistenzvorrichtung den Ausparkvorgang nur dann startet oder fortführt, wenn anhand des Gefährdungsmaßes feststeht, dass keine Kollision mit den sich annähernden Fahrzeugen (04, 05, 34, 35, 44, 45) zu erwarten ist.

10. Fahrassistenzvorrichtung nach einem der vorhergehenden Ansprüche, **dadurch gekennzeichnet, dass** eine Aktivierung des Meßsystems unterbleibt, solange das ausparkendes Fahrzeug (01, 31, 41) nicht ausparken möchte.

11. Fahrassistenzvorrichtung nach Anspruch 10, **dadurch gekennzeichnet, dass** eine Warnung von sich annähernden Fahrzeugen (04, 05, 34, 35, 44, 45) erst dann gegeben wird, wenn das ausparkende Fahrzeug (01, 31, 41) sich in seiner Parklücke (02, 32, 42) bewegt.

12. Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens zur Anwendung einer Fahrassistenzvorrichtung nach einem der vorhergehenden Ansprüche veranlassen.
